# EUROPÄISCHE PATENTSCHRIFT

(11) **EP 1 833 192 B1**
(45) Veröffentlichungstag und Bekanntmachung des Hinweises auf die Patenterteilung: **27.11.2013**
(21) Anmeldenummer: 06013685.0
(22) Anmeldetag: 01.07.2006
(51) Int. Cl.: H04L 29/08, H04L 12/08

(54) **Verfahren zur Übergabe des Zugriffs auf eine serverbasierte Anwendungssitzung an ein Kommunikationsendgerät**
Method for transferring the access to a server-based application to a communication device
Procédé de transfert de l'accès à une application basée sur un serveur à un dispositif de communication

(30) Priorität: 09.03.2006 EP 06004828
(43) Veröffentlichungstag der Anmeldung: 12.09.2007
(73) Patentinhaber: Deutsche Telekom AG, 53113 Bonn (DE)
(72) Erfinder: Linke, Kevin, 01127 Dresden (DE); Schukat, Alexander, 01097 Dresden (DE)
(74) Vertreter: Kampfenkel, Klaus

(56) Entgegenhaltungen:
- EP-A- 1 303 102
- WO-A-2005/015882
- WO-A-2005/055502
- US-A1- 2003 055 977
- SKOW E ET AL: "A security architecture for application session handoff" ICC 2002. 2002 IEEE INTERNATIONAL CONFERENCE ON COMMUNICATIONS. CONFERENCE PROCEEDINGS. NEW YORK, NY, APRIL 28 - MAY 2, 2002, IEEE INTERNATIONAL CONFERENCE ON COMMUNICATIONS, NEW YORK, NY : IEEE, US, Bd. VOL. 1 OF 5, 28. April 2002 (2002-04-28), Seiten 2058-2063, XP010589848 ISBN: 0-7803-7400-2

## Beschreibung

Die Erfindung betrifft ein Verfahren zur Steuerung des Zugriffs mehrerer Kommunikationsendgeräte auf eine serverbasierte Anwendungssitzung sowie ein Kommunikationssystem, welches insbesondere zur Ausführung des Verfahrens dient.

Immer häufiger werden Anwendungsserver, auch Applikationsserver eingesetzt, die Kunden Anwendungs- und/oder Kommunikationsdienste anbieten können, ohne dass die Kunden die Anwendungssoftware selbst kaufen müssen. Die Endgeräte sowie die Applikationsserver können über ein öffentliches Netz, zum Beispiel das Internet, miteinander verbunden sein, so dass Anwendungsdienste den Kunden auch über das Internet angeboten werden können. Anzumerken ist, dass die Endgeräte natürlich auch an verschiedenen Netzwerken angeschlossen sein können.

Solange ein Nutzer einen von einem Anwendungsserver bereitgestellten Dienst nutzt, ist er an das Endgerät gebunden, von welchem aus er diesen Dienst gestartet hat. Es gibt Umstände, bei denen ein Nutzer jedoch selbst entscheiden möchte, welche Endgeräte er für die Ausführung eines Anwendungsdienstes nutzen möchte. Insbesondere mit der zunehmenden Verbreitung öffentlich verfügbarer drahtloser Netzwerke und dem zunehmenden Einsatz mobiler Endgeräte entsteht der Bedarf nach einer Übertragungs- oder Übergabemöglichkeit der Dienstausführung und der dazugehörigen Sitzungsinformationen von stationären Endgeräten auf mobile Endgeräte und umgekehrt.

Aus der US 2004/0044721 A1 ist ein Verfahren bekannt, mit welchem ein Nutzer eine Anwendungssitzung fortsetzen kann, auch wenn er das Endgerät wechselt. Hierzu wird der Status einer Anwendungssitzung, der an einem ersten Endgerät ermittelt wird, in einem zentralen Speicher abgelegt. Dieser Anwendungssitzungszustand kann von einem zweiten Endgerät vom zentralen Speicher abgefragt werden. Auf diese Weise wird das zweite Endgerät in die Lage versetzt, die Sitzung unter Ansprechen auf den gespeicherten Anwendungssitzungszustand fortzusetzen.

Aus der WO 2005/109829 A1 ist ein Verfahren bekannt, mit welchem die Ausführung einer Softwareanwendung von einem ersten Gerät zu einem zweiten Gerät nahtlos übertragen werden kann. Hierzu werden in dem Endgerät, welches aktuell die Anwendung ausführt, Parameter gespeichert, die den Betrieb der Softwareanwendung steuern. Diese Parameter werden einem zweiten Gerät übergeben, welches unter Ansprechen auf dieser Parameter die Ausführung der Softwareanwendung ohne Unterbrechung fortsetzen kann. Die Ausführung der Anwendung auf dem ersten Gerät wird daraufhin beendet.

Aus der WO 03/063451 A1 ist ein Kommunikationssystem bekannt, bei welchem Verbindungen zu einem ersten Terminal während der Ausführung einer Sitzung auf ein zweites Terminal übergeben werden können, so dass die Sitzung am zweiten Endgerät fortgesetzt werden kann. Hierzu ist eine Einrichtung vorgesehen, die auf einem Server Nutzerprofile erstellt, aus denen ein Parametersatz erzeugt werden kann, welcher ein virtuelles Terminal definiert. Weiterhin werden Parameter des virtuellen Terminals gespeichert, wobei die Parameter Informationen über eine laufende Kommunikationssitzung unter Verwendung eines ersten Terminals enthalten.

Aus "A security architecture for application handoff" von Skow et al., ICC 2002, 2002 IEEE International Conference on Communications, New York, NY: IEEE, US, Bd. Vol. 1 of 5, 28. April 2002, Seiten 2058-2063, ist eine Sicherheitsarchitektur für eine universelle Datenverarbeitung bekannt, beispielsweise den Zugriff auf eine medizinische Datenbank mit unterschiedlichen Endgeräten über drahtlose und drahtgebundene Verbindungen. Die Architektur umfasst einen Applikationsserver, welcher Services und Daten für eine Anzahl heterogener Clients bereitstellt. Ein oder mehrere Middleware-Server stellen eine Middleware-Schicht zwischen dem Applikationsserver und den Clients bereit, durch welche unter anderem die Funktionalität der Übergabe von Applikationssitzungen bereitgestellt wird. Zu diesem Zweck wird zunächst nach erfolgreicher Authentifizierung eines ersten Clients am Middleware-Server ein Geräte-Kontrollkanal (device control channel DCC) aufgebaut und das Client-Gerät in einer lokalen Liste des Middleware-Servers registriert. Der Benutzer kann nun auf dem Client eine Applikationssitzung starten, wobei zu diesem Zweck zunächst ein sicherer Sitzungskontrollkanal (session control channel SCC) zum Middleware-Server und dann ein sicherer Sitzungsdatenkanal (session data channel SDC) zu einem Applikationsserver aufgebaut werden. Die Sicherheit wird dabei durch die Verwendung entsprechend zugeordneter Geheimnisse erreicht. Eine Sitzungsübergabe vom ersten an einen zweiten Client kann von jedem der beiden Clients angefordert werden, also sowohl vom übergebenden als auch vom annehmenden Client. Wird die Sitzungsübergabe durch den ersten Client angefordert, so fordert der erste Client zunächst eine Liste möglicher Empfänger-Clients vom Middleware-Server an, wählt von diesen einen aus und sendet die Auswahl an den Middleware-Server. Ferner sendet der erste Client die für eine Sitzungsübergabe erforderlichen Sitzungsparameter und Applikationszustände an den Middleware-Server. Der Middleware-Server sendet daraufhin eine Einladung zur Sitzungsannahme an den zweiten Client, die dieser annehmen oder ablehnen kann. Bei Annahme baut der zweite Client einen SCC zum Middleware-Server auf und der Middleware-Server sendet eine Bestätigungsnachricht an den zweiten Client. Nach Aufbau des SCC signalisiert der zweite Client dem Middleware-Server seine Bereitschaft zur Übergabe der Sitzung. Daraufhin sendet der Middleware-Server die Sitzungsparameter zum zweiten Client und eine Aufforderung zur Beendigung der Sitzung an den ersten Client. Wird die Sitzungsübergabe durch den zweiten Client angefordert, so baut dieser zunächst einen SCC zum Middleware-Server auf, wodurch eine Basis-Sitzung erzeugt wird. Der zweite Client fordert daraufhin eine Liste verfügbarer Sitzungen vom Middleware-Server an, wählt von diesen eine aus und sendet die Auswahl an den Middleware-Server. Der Middleware-Server fordert daraufhin von dem ersten Client die Sitzungsparameter an und leitet diese an den zweiten Client weiter, woraufhin der zweite Client die Parameter der Basis-Sitzung entsprechend anpasst. Anschließend wird der erste Client wiederum vom Middleware-Server aufgefordert, die Sitzung zu beenden.

WO 2005/015882 A beschreibt ein Verfahren und ein System zur Sitzungssteuerung von Web-Applikationen, wobei eine neue Sitzungssteuerungs-Komponente vorgesehen ist, mittels der für mehrere Sitzungen eine übergeordnete Sitzung erzeugt wird. Diese übergeordnete Sitzung stellt eine Nutzersitzung für mehrere Endgeräte desselben Nutzers dar. Die Sitzungsdaten, welche vom jeweils in Benutzung befindlichen Endgerät erzeugt werden, fängt die neue Sitzungssteuerungs-Komponente ab, weist sie der übergeordneten Sitzung zu und synchronisiert die übrigen Sitzungen mit dieser.

In US 2003/055977 A1 wird ein System zur Sitzungsübertragung zwischen von einem ersten zu einem zweiten Endgerät beschrieben, wobei für diesen Zweck ein Sitzungstransfermodul vorgesehen ist, welches mittels einer Client-Softwareanwendung des ersten Gerätes gestartet wird. Zur Einleitung der Sitzungsübergabe stellt der Client des ersten Gerätes eine Auswahl möglicher Geräte bereit, an welche die Sitzung übergeben werden kann, und überträgt eine Identifikation des ausgewählten zweiten Gerätes, sowie die Sitzungshistorie an das Sitzungstransfermodul, welches daraufhin die Sitzung an das zweite Gerät überträgt. Ferner ist eine Datenbank vorgesehen, in welcher Geräteprofile hinterlegt sind, so dass mittels eines Datenbearbeitungsmoduls eine Umformatierung der Sitzungshistorie erfolgen kann.

WO 2005/055502 A beschreibt ein Verfahren und ein System zur Übergabe einer Multimediasitzung zwischen zwei an unterschiedlichen Netzwerken angeschlossenen Endgeräten, beispielsweise von einem an ein WLAN angeschlossenen PC an ein mit einem UMTS-Netzwerk verbundenen Mobiltelefon, unter Verwendung von SIP (Session Initiation Protocol).

Der Erfindung liegt die Aufgabe zugrunde, ein Verfahren sowie ein Kommunikationssystem bereitzustellen, welches den Zugriff auf Applikations- und/oder Kommunikationssitzungen steuert, so dass Sitzungen, die an einem Endgerät eingeleitet wurden, an ein anderes Endgerät übergeben werden können. Eine weitere Aufgabe ist darin zu sehen, ein Verfahren sowie ein Kommunikationssystem bereitzustellen, welche eine flexible und dynamische Übertragung des Zugriffs zu einer Anwendungssitzung von einem Endgerät auf ein anderes ermöglichen.

Ein Kerngedanke der Erfindung ist darin zu sehen, Kommunikationsendgeräte, die mit einem oder verschiedenen Netzwerken verbunden sind, mit einem zusätzlichen Softwaremodul, welches nachfolgend Sitzungssteuereinrichtung genannt wird, auszustatten. Diese Sitzungssteuereinrichtung ist in der Lage, Signalisierungsdaten mit einer einem Anwendungsserver zugeordneten Sitzungssteuereinrichtung auszutauschen, um Anwendungssitzungen aufbauen, beenden und/oder von einem Endgerät zu einem anderen Endgerät übergeben zu können. Vorzugsweise ist die dem Anwendungsserver zugeordnete Sitzungssteuereinrichtung Bestandteil einer Middleware. Die in der Regel als Softwaremodul ausgebildete Sitzungssteuereinrichtung weist Kommunikationsschnittstellen auf, über die sie mit den Sitzungssteuereinrichtungen der Kommunikationsendgeräte und dem Anwendungsserver kommunizieren kann. Auf diese Weise können einerseits bestehende Anwendungen um die Fähigkeit einer Sitzungsübertragung erweitert werden, ohne deren Implementierung verändern zu müssen. Dies ist insbesondere dann nützlich, wenn der Anwendungsserver nicht von dem Betreiber stammt, der das Leistungsmerkmal der Sitzungsübertragung anbietet. Ein weiterer Vorteil dieser Ausgestaltung ist, dass bereits existierende Anwendungssysteme nachträglich erweitert werden können, indem die erwähnten Sitzungssteuereinrichtungen im Zuge einer Weiterentwicklung des Anwendungssystems in den Kommunikationsendgeräten und in der Middleware integriert werden können. Dies gilt insbesondere für Anwendungssysteme, die unmittelbar von dem Betreiber stammen, der das Leistungsmerkmal der Sitzungsübertragung anbieten möchte.

Ein weiterer Gesichtspunkt der Erfindung ist darin zu sehen, das Kommunikationssystem um eine an sich bekannte Präsenz-Fähigkeit zu erweitern. Hierzu wird in der Middleware ein Presenceserver implementiert, der Anwesenheitsinformationen der am Kommunikationssystem beteiligten Kommunikationsendgeräte sammelt und speichert. Die Anwesenheitsinformationen, auch Präsenzinformation genannt, können beispielsweise durch einen Presence-Network-Agent oder einen Presence-User-Agent gesammelt werden, der beispielsweise in ETSI TS123141V6.8.0(2000-06) beschrieben ist. In diesem Fall fungieren die Kommunikationsendgeräte als sogenannte Presentities.

In Verbindung mit dem Presenceserver kann ein Anwesenheitsinformationsfilter, nachfolgend auch Präsenzinformations-Filter (PIF) genannt, verwendet werden, der die zwischen Presentities und Watchers ausgetauschten Anwesenheitsinformationen filtern und/oder verändern kann.

Ein Watcher ist eine Funktionseinheit, welche den Anwesenheitszustand eines Presentity überwacht, wie dies in ETSI TS 123 141V6.8.0. beschrieben ist.

Das oben genannte technische Problem wird durch die Verfahrensschritte des Anspruchs 1 gelöst.

Danach wird ein Verfahren zur Steuerung des Zugriffs mehrerer Kommunikationsendgeräte auf eine serverbasierte Anwendungssitzung zur Verfügung gestellt. Der Ausdruck "serverbasierte Anwendungssitzung" bedeutet im Rahmen dieser Erfindung, dass ein Anwendungsserver vorgesehen ist, der Anwendungs- und/oder Kommunikationsdienste bereitstellt, auf die Kommunikationsendgeräte über Anwendungs- und/oder Kommunikationssitzungen zugreifen können.

In jedem Kommunikationsendgerät sind ein Anwendungsclient, auch als Applikationsclient bekannt, sowie eine Sitzungssteuereinrichtung implementiert. Wie bereits erwähnt, wird von einem Anwendungsserver wenigstens eine Softwareanwendung bereitgestellt. Unter einer Softwareanwendung ist im Rahmen der Erfindung beispielsweise ein Applikationsdienst oder ein Kommunikationsdienst zu verstehen.

Um eine Anwendungssitzung zwischen einem Kommunikationsendgerät und dem Anwendungsserver aufbauen zu können, wird von der Sitzungssteuereinrichtung eines ersten Kommunikationsendgerätes eine Sitzungsanforderungs-Nachricht zu einer weiteren, dem Anwendungsserver zugeordneten Sitzungssteuereinrichtung gesendet. Der Anwendungsserver startet nunmehr die angeforderte Anwendungssitzung. Um die gestartete Anwendungssitzung identifizieren zu können, wird dieser eine Kennung durch den Anwendungsserver zugeordnet. Die Kennung der Anwendungssitzung wird dann zum ersten Kommunikationsendgerät übertragen. Unter Ansprechen auf die Kennung der Anwendungssitzung wird eine Anwendungssitzung vom Anwendungsclient des ersten Kommunikationsendgerätes zum Anwendungsserver hergestellt. Um die Anwendungssitzung dem ersten Kommunikationsendgerät zuordnen zu können, wird eine dem ersten Kommunikationsendgerät zugeordnete Kennung zur weiteren Sitzungssteuereinrichtung übertragen. Anschließend wird eine Zuordnung zwischen der Kennung der Anwendungssitzung und der Kennung des ersten Kommunikationsendgerätes erzeugt.

Um die Übergabe des Zugriffs auf die hergestellte Anwendungssitzung vom ersten Kommunikationsendgerät auf ein zweite Kommunikationsendgerät einleiten zu können, wird eine zugriffsberechtigungs-Anforderungs-Nachricht für das zweite Kommunikationsendgerät zur weiteren Sitzungssteuereinrichtung übertragen. Daraufhin wird eine Einladungsnachricht, welche zum Beispiel die Kennung der Anwendungssitzung enthalten kann, zum zweiten Kommunikationsendgerät übertragen. Unter Ansprechen auf die Einladungsnachricht wird eine Verbindung zwischen dem Anwendungsclient des zweiten Kommunikationsendgerätes und dem Anwendungsserver hergestellt, so dass der Anwendungsclient auf die Anwendungssitzung zugreifen kann. Eine dem zweiten Kommunikationsendgerät zugeordnete Kennung wird ebenfalls zur weiteren Sitzungssteuereinrichtung übertragen, die eine Zuordnung zwischen der Kennung der Anwendungssitzung und der Kennung des zweiten Endgerätes erzeugt. Auf diese Weise wird die Übergabe der Anwendungssitzung vom einem Kommunikationsendgerät auf ein anderes Kommunikationsendgerät abgeschlossen.

Vorteilhafte Weiterbildungen sind Gegenstand der Unteransprüche.
Gemäß einer bevorzugten Ausführungsform sind der Anwendungsserver und der Anwendungsclient des ersten Kommunikationsendgerätes derart ausgebildet, dass diese Nachrichten zum Herstellen der Anwendungssitzung unter Ansprechen auf die Kennung der Anwendungssitzung austauschen können.

Für den Fall, dass der Anwendungsserver und die Anwendungsclients der Kommunikationsendgeräte nicht geeignet sind, Anwendungssitzungen zu übergeben, fungiert die weitere, dem Anwendungsserver zugeordnete Sitzungssteuereinrichtung als Vermittlungszentrale, die die Sitzungssteuereinrichtung des ersten Kommunikationsendgerätes veranlasst, den Anwendungsclient des ersten Kommunikationsendgerätes zu starten, um die Anwendungssitzung zwischen dem Anwendungsclient des ersten Kommunikationsendgerätes und dem Anwendungsserver herzustellen.

Gemäß einer bevorzugten Ausführungsform kann die Übergabe einer Anwendungssitzung durch das erste Kommunikationsendgerät, welches augenblicklich an der Anwendungssitzung beteiligt ist, eingeleitet werden. Hierzu überträgt die Sitzungssteuereinrichtung des ersten Kommunikationsendgerätes die Zugriffsberechtigungs-Anforderungs-Nachricht zur weiteren, dem Anwendungsserver zugeordneten Sitzungssteuereinrichtung, wobei die Zugriffsberechtigungs-Anforderungs-Nachricht eine Kennung des zweiten Kommunikationsendgerätes enthält.

Alternativ kann die Übergabe des Zugriffs einer Anwendungssitzung auch von demjenigen Kommunikationsendgerät eingeleitet werden, welches der Anwendungssitzung betreten möchte. Hierzu überträgt die Sitzungssteuereinrichtung des zweiten Kommunikationsendgerätes eine Zugriffsberechtigungs-Anforderungs-Nachricht zur weiteren Sitzungssteuereinrichtung, wobei die Zugriffsberechtigungs-Anforderungs-Nachricht eine Kennung des ersten Kommunikationsendgerätes enthält.

Weiterhin können Kommunikationsendgeräte bezogene Informationen, nutzerspezifische Informationen und/oder Steuerparameter, zum Beispiel Filterparameter, gespeichert werden, anhand derer geprüft werden kann, ob die Anwendungssitzung vom ersten Kommunikationsendgerät auf das zweite Kommunikationsendgerät übergeben werden darf. Auf diese Weise ist eine dynamische und flexible Steuerung der Übergabe des Zugriffs möglich, die neben dem Typ der Anwendungssitzung auch die Besonderheiten der Kommunikationsendgeräte berücksichtigen kann.

Um zu verhindern, dass Identifikationssdaten hinsichtlich der beteiligten Kommunikationsendgeräte und/oder der beteiligten Nutzer für Dritte zugänglich werden, können die den ersten und zweiten Kommunikationsendgeräten zugeordneten Kennungen auf eine vorbestimmte neutrale Kennung abgebildet werden. Nur diese neutrale Kennung ist für Dritte sichtbar.

Um Übertragungskapazität und Übertragungskosten einsparen zu können, kann vorgesehen sein, dass die weitere Sitzungssteuereinrichtung die Anwendungssitzung zwischen dem Anwendungsclient des ersten Kommunikationsendgerätes und dem Anwendungsserver nach der Übergabe der Anwendungssitzung auf das zweite Kommunikationsendgerät beendet.

Je nach Implementierung des Anwendungsservers kann die Aufforderung, eine Übergabe der Anwendungssitzung einzuleiten, vom Anwendungsserver oder von der dem Anwendungsserver zugeordneten Sitzungssteuereinrichtung aus gestartet werden.

Gemäß einer besonderen Ausführungsform wird hierzu unter Steuerung der weiteren Sitzungssteuereinrichtung der Anwendungsserver aufgefordert, eine Einladungsnachricht, welche die Kennung der Anwendungssitzung enthalten kann, zum zweiten Kommunikationsendgerät zu übertragen. Der Anwendungsserver wird weiterhin aufgefordert, eine Verbindung zum Anwendungsclient des zweiten Kommunikationsendgerätes zum Anwendungsserver unter Ansprechen auf die Einladungsnachricht herzustellen, so dass der Anwendungsclient auf die Anwendungssitzung zugreifen kann.

Alternativ überträgt die weitere Sitzungssteuereinrichtung selbst eine Einladungsnachricht zum zweiten Kommunikationsendgerät. Anschließend veranlasst sie den Anwendungsclient des zweiten Kommunikationsendgerätes, unter Ansprechen auf die Einladungsnachricht eine Verbindung zum Anwendungsserver herzustellen, so dass der Anwendungsclient auf die Anwendungssitzung zugreifen kann.

Nachfolgend wird exemplarisch ein Kommunikationssystem zur Steuerung des Zugriffs auf eine serverbasierte Anwendungssitzung beschrieben.

Danach weist das Kommunikationssystem wenigstens ein erstes und wenigstens ein zweites Kommunikationsendgerät auf, die mit einem gemeinsamen Netzwerk oder mit verschiedenen Netzwerken verbunden sein können. Jedes Kommunikationsendgerät weist einen Anwendungsclient und eine Sitzungssteuereinrichtung auf. Weiterhin ist wenigstens ein Anwendungsserver vorgesehen, der zumindest eine Anwendungssoftware bereitstellt. Darüber hinaus ist eine weitere Sitzungssteuereinrichtung vorgesehen, die Kommunikationsschnittstellen zur Kommunikation mit dem ersten und zweiten Kommunikationsendgerät und dem Anwendungsserver aufweist. Die weitere Sitzungssteuereinrichtung und die Sitzungssteuereinrichtung des ersten und/oder zweiten Kommunikationsendgerätes sind zum Austauschen von ersten Signalisierungsdaten ausgebildet, die den Aufbau einer Anwendungssitzung zwischen dem jeweiligen Kommunikationsendgerät und dem Anwendungsserver steuern. Ferner sind die weitere Sitzungssteuereinrichtung und die Sitzungssteuereinrichtung des ersten und/oder zweiten Kommunikationsendgerätes zum Austauschen von zweiten Signalisierungsdaten ausgebildet, die die Übergabe des Zugriffs zu einer bestehenden Anwendungssitzung auf ein anderes Kommunikationsendgerät steuern.

Um die Übergabe einer Anwendungssitzung dynamisch und flexibel steuern zu können, ist ein sogenannter Presenceserver vorgesehen, der Informationen über die beteiligten Kommunikationsendgeräte und Nutzer sammelt und speichert. Ferner ist eine Speichereinrichtung vorgesehen, in der Steuerparameter und Filterregeln abgelegt sind, die unter anderem festlegen, ob ein Kommunikationsendgerät auf eine bestehende Anwendungssitzung zugreifen darf. Die weitere Sitzungssteuereinrichtung kann auf den Inhalt des Presenceservers und der Speichereinrichtung zugreifen, um die Übergabe einer Anwendungssitzung zu steuern.

Dank der Maßnahme, eine Sitzungssteuereinrichtung im Anwendungsserver und jeweils eine Sitzungssteuereinrichtung den Kommunikationsendgeräten zuzuordnen, ist es möglich, ein bestehendes Kommunikationssystem mit einer Anwendungssitzungs-Übergabefunktionalität auszustatten. Hierzu ist es zweckmäßig, die weitere Sitzungssteuereinrichtung als Middleware auszubilden. Ferner können auch der Presenceserver und die Speichereinrichtung Bestandteil der Middelware sein.

Insbesondere sind die Sitzungssteuereinrichtungen des ersten und zweiten Kommunikationsendgerätes derart ausgebildet, dass sie die ihnen zugeordneten. Anwendungsclients starten können. Dies ist insbesondere dann notwendig, wenn herkömmliche Anwendungsserver verwendet werden, die nicht in der Lage sind, die Übergabe des Zugriffs auf eine Anwendungssitzung zu unterstützen.

Nachfolgend wird die Erfindung anhand von zwei Ausführungsbeispiele in Verbindung mit den beiliegenden Zeichnungen näher erläutert.

Es zeigen:
Fig. 1 ein schematisches Blockschaltbild eines Kommunikationssystems, in welchem die Funktionalität der Anwendungssitzungsübergabe implementiert ist,
Fig. 2 das in Fig. 1 gezeigte Blockschaltbild, welches graphisch die Schritte zur Übergabe einer Anwendungssitzung darstellt, die am Kommunikationsendgerät 10 ausgelöst wird, und
Fig. 3 das in Fig. 1 dargestellt Blockschaltbild, welches graphisch die Schritte zur Übergabe einer Anwendungssitzung darstellt, die am Kommunikationsendgerät 20 ausgelöst wird.

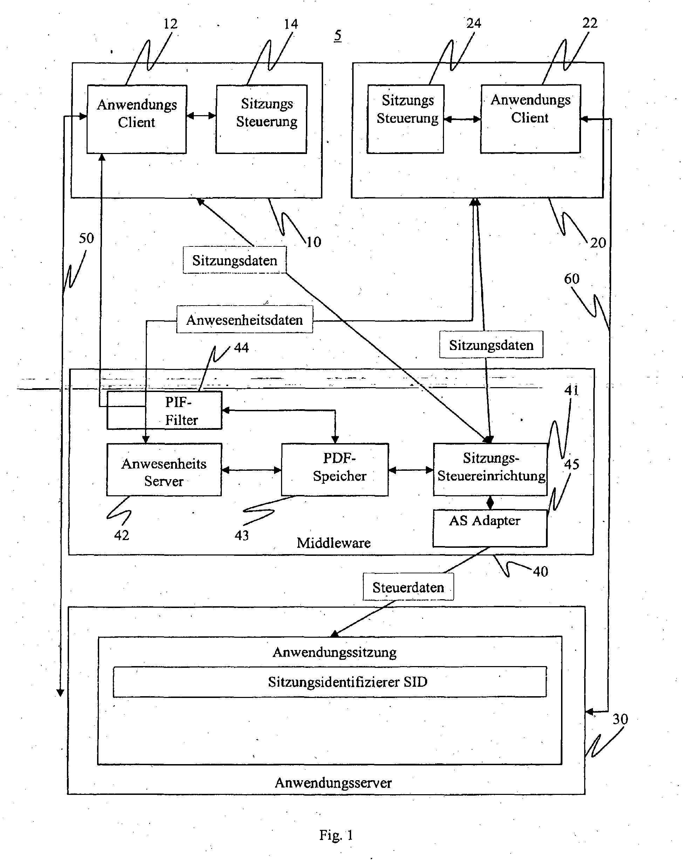

Fig. 1 zeigt ein Kommunikationssystem 5, welches das Dienstleistungsmerkmal der Übergabe des Zugriffs auf eine Anwendungssitzung von einem Kommunikationsendgerät auf ein anderes Kommunikationsendgerät unterstützt. Der einfachen Darstellung wegen sind lediglich zwei Kommunikationsendgeräte 10 und 20 dargestellt, die beispielsweise über ein öffentliches Netz, wie zum Beispiel das Internet, mit einem Anwendungsserver 30, auch Applikationsserver genannt, verbunden werden können. Die Kommunikationsverbindungen zwischen den Kommunikationsendgeräten und dem Anwendungsserver 30 sind mit den Bezugszeichen 50 und 60 versehen.

Zu Erläuterungszwecken sei angenommen, dass das Kommunikationsendgerät 10 ein stationäres Gerät, beispielsweise ein Personalcomputer ist, wohingegen das Kommunikationsendgerät 20 ein mobiles Gerät, beispielsweise ein PDA ist. Jedes Kommunikationsendgerät weist einen Anwendungsclient und eine Sitzungssteuereinrichtung, nachfolgend kurz Sitzungssteuerung genannt, auf. Im vorliegenden Beispiel ist im Kommunikationsendgerät 10 ein Anwendungsclient 12 sowie eine Sitzungssteuerung 14 implementiert. Anwendungsclient 12 und Sitzungssteuerung 14 können als separate Softwaremodule implementiert sein. Alternativ kann die Sitzungssteuerung 14 auch als Bestandteil des Anwendungsclients 12 implementiert sein. In ähnlicher Weise ist in dem Kommunikationsendgerät 20 eine Sitzungssteuerung 24 und ein Anwendungsclient 22 implementiert. Auch hier können Sitzungssteuerung 24 und Anwendungsclient 22 als separate Softwaremodule ausgebildet sein. Allerdings ist es auch wiederum denkbar, die Sitzungssteuerung 24 als Bestandteil des Anwendungsclients 22 auszubilden. Angemerkt sei ferner, dass in jedem Kommunikationsendgerät mehrere Anwendungsclients implementiert sein können. Weiterhin ist denkbar, dass die Anwendungsclients auf den jeweiligen Kommunikationsendgeräten 10, 20 vorinstalliert sind, oder je nach Bedarf über das Internet herunter geladen werden können. Zudem sind die Kommunikationsendgeräte 10 und 20 mit der notwendigen Rechenleistung und den notwendigen Hardwarekomponenten ausgestattet, um auf die vom Applikationsserver 30 bereitgestellten Anwendungsdienste zugreifen und damit an Anwendungssitzungen des Applikationsservers 30 teilnehmen zu können.

Weiterhin ist eine Sitzungssteuereinrichtung 41 im Kommunikationssystem 5 implementiert, welche mit den Sitzungssteuerungen 14 und 24 des Kommunikationsendgeräts 10 beziehungsweise 20 kommunizieren kann. An dieser Stelle sei erwähnt, dass die Sitzungssteuerungen 14 und 24 in Abhängigkeit von Sitzungssignalisierungsdaten, die mit der Sitzungssteuereinrichtung 41 ausgetauscht werden, den Anwendungsclient 12 beziehungsweise 22 steuern kann. Weiterhin kann ein Presenceserver 42 vorgesehen sein, der mit den Kommunikationsendgeräten 10 und 20 verbunden werden kann. Anwesenheitsdaten der Kommunikationsendgeräte können in dem Presenceserve 42 gesammelt und verwaltet werden. In diesem Fall sind die Kommunikationsendgeräte 10 und 20 in der Lage, als sogenannte Presentities sowie als Presence-Watchers gegenüber dem Presenceserver 42 zu agieren. Die von den Kommunikationsendgeräten kommenden Präsenzinformationen können beispielsweise durch einen Presence-Networkagent oder durch einen Presence-User-Agent gesammelt werden, wie dies in DTSI TS 123141V 6.8.0. beschrieben ist. Der Presenceserver 42 kann insbesondere dazu verwendet werden, Endgeräte gebundene Nutzer-IDs auf eine einzige extern sichtbare Nutzer-ID abzubilden, um so die Komplexität der Endgeräteverwaltung und -adressierung vor den Anwendern zu verbergen. Die Sitzungssteuereinrichtung 41 ist derart ausgebildet, dass sie die Präsenzinformationen vom Presenceserver 42 für die weitere Bearbeitung, insbesondere hinsichtlich einer Übertragung einer Anwendungssitzung von einem Kommunikationsendgerät auf ein anderes Kommunikationsendgerät, abfragen kann. Weiterhin ist eine Speichereinrichtung 43 vorgesehen, in der Entscheidungsregeln abgelegt sind, die die von den Kommunikationsendgeräten 10 und 20 hinterlegten Präsenzdaten, während Anwendungssitzungen anfallenden Sitzungsdaten und andere Steuerparameter berücksichtigen kann. Die Steuerparameter können Informationen über die Besitzer der Kommunikationsendgeräte, des Applikationsservers, spezifische Gerätefähigkeiten, Typen der Anwendungsdienste, gesetzliche und/oder vertragliche Vorschriften der Serviceprovider und andere Bestimmungen oder Daten enthalten. Die in der Speichereinrichtung 43 hinterlegten Regeln können statische und/oder dynamische Regeln sein.

Statische Regeln sind Regeln, die für eine längere Zeitspanne gültig sein können. Diese Regeln basieren beispielsweise auf vertragliche oder systembedingte Beschränkungen. Beispiele für statische Regeln sind:
1. Ein Benutzer darf sich lediglich an den beiden Kommunikationsendgeräten 10 und 20 gleichzeitig anmelden. Demzufolge kann eine Sitzungsübertragung nur vom Kommunikationsendgerät 10 auf das Kommunikationsendgerät 20 und umgekehrt erfolgen.
2. Nur Benutzer mit einem monatlichen Umsatz von mehr als 50,00 € sind berechtigt, die Funktionalität "Sitzungsübertragung" zu benutzen.
3. Eine Sitzungsübertragung von einem Personalcomputer X auf einen Personalcomputer Y ist nicht erlaubt.

Hingegen sind dynamische Regel für eine kürzere Zeitspanne und lediglich innerhalb einer Sitzung zulässig. Derartige Regeln können auf der Grundlage von Sitzungsbeschreibungen und Gerätefähigkeiten, des Benutzerstandorts oder anderen Kontextinformationen erstellt werden. Beispiel für dynamische Regeln sind:
1. Ein Benutzer kann eine Videositzung nicht vom Kommunikationsendgerät 10 auf das Kommunikationsendgerät 20 übertragen, da das Kommunikationsendgerät 20, welches beispielsweise ein PDA ist, keine Videodaten verarbeiten kann.
2. Ein Benutzer kann keine Sitzung vom Kommunikationsendgerät 10 auf das Kommunikationsendgerät 20 übertragen, da sich das Kommunikationsendgerät 20 nicht im gleichen Gebäude wie das Kommunikationsendgerät 10 befindet.

Da die in der Speichereinrichtung 43 abgelegten Regeln festlegen, wann und ob eine Sitzungsübertragung von einem Kommunikationsendgerät auf ein anderes Kommunikationsendgerät stattfinden darf, wird die Speichereinrichtung 43 auch als Policy-Decision-Function (PDF)-Speicher bezeichnet. Die Informationen, welche zum Erzeugen dieser Regeln benötigt werden, können von der Sitzungssteuereinrichtung 41, vom Presenceserver 42, vom Applikationsserver 30 oder anderen externen Datenquellen bereitgestellt werden. Weiterhin kann ein Präsenzinformationsfilter 44, kurz auch PIF genannt, implementiert sein. Der PIF 44 ist dazu ausgebildet, Anwesenheitsdaten der Kommunikationsendgeräte zu filtern und/oder zu ändern. So können beispielsweise Präsenzdaten einer als Presentitiy fungierenden Kommunikationsendeinrichtung als ein mögliches Ziel für eine Sitzungsübertragung markiert werden. Andererseits können Präsenzdaten eines Kommunikationsendgerätes derart gekennzeichnet werden, dass das jeweilige Kommunikationsendgerät nicht als mögliches Ziel einer Sitzungsübertragung zur Verfügung steht. Die Regeln für den Betrieb des Präsenzinformationsfilters 44 werden von der Speichereinrichtung 43 zur Verfügung gestellt. Die vom Presenceserver 42 zur Verfügung gestellten Daten und die von der Speichereinrichtung 43 zur Verfügung gestellten Regeln werden von dem PIF 44 dazu verwendet, zu entscheiden, ob Sitzungsübertragungen zwischen bestimmten Kommunikationsendgeräten durchgeführt werden können oder nicht. Weiterhin verfügt die Sitzungssteuereinrichtung 41 über einen Applikationsserver-Adapter 45, kurz auch AS-Adapter genannt, welcher eine Schnittstelle zur Kommunikation der Sitzungssteuereinrichtung 41 mit dem Applikationsserver 30 herstellt. Darüber hinaus weist die Sitzungssteuereinrichtung 41 Kommunikationsschnittstellen (nicht dargestellt) auf, über die sie mit den Kommunikationsendgeräten 10 und 20 Sitzungsdaten austauschen kann, wie dies schematisch in Fig. 1 durch doppelt gerichtete Pfeile dargestellt ist. Sitzungssignalisierungsdaten werden zwischen der Sitzungssteuereinrichtung 41 und den Sitzungssteuerungen 14 und 24 der Kommunikationsendgeräte 10 beziehungsweise 20 beispielsweise über das Internet ausgetauscht. Auch die Präsenzdaten von den Kommunikationsendgeräten 10 und 20 werden über Internetverbindungen zum Presenceserver 42 übertragen.

In vorteilhafter Weise sind die Sitzungssteuereinrichtung 41, der PDF Speicher 43, der Presenceserver 42 und das Präsenzinformationsfilter 44 als Middleware 40 ausgebildet, welche als Vermittlungseinrichtung zwischen den Kommunikationsendgeräten 10 und 20 und dem Applikationsserver 30 fungiert. Wie in Fig. 1 durch doppelt gerichtete Pfeile dargestellt, sind die Applikationsclients 22 und 12 sowie der Applikationsserver 30 als proprietäre Module ausgebildet, so dass eine Kommunikation zwischen ihnen über proprietäre Protokolle erfolgen muss. Derartige Applikationsclients beziehungsweise Applikationsserver sind nicht in der Lage, eine Anwendungssitzung von einem Kommunikationsendgerät auf ein anderes Kommunikationsendgerät zu übergeben. Diese Funktionalität wird von der Sitzungssteuereinrichtung 41 und den Sitzungssteuerungen 14 und 24 in dem Kommunikationsendgerät 10 beziehungsweise 20 bereitgestellt. Wie in Fig. 1 schematisch dargestellt, sind in dem Applikationsserver 30 Applikationsdienste abgelegt. Einer aufgebauten Applikationssitzung wird ein Sitzungsidentifizierer, auch Session Identifier SID genannt, zugeordnet und im Anwendungsserver 30 gespeichert. Sitzungssignalisierungsdaten und Steuerdaten werden von der Sitzungssteuereinrichtung 41 über den Application Server Adapter 45 zum Applikationsserver 30 übertragen.

Der Applikationsserver 30 stellt, wie oben bereits erwähnt, Applikationsdienste den Kommunikationsendgeräten 10 und 20 zur Verfügung. Der Applikationsserver 30 kann ein proprietäres Produkt sein, welches folgende Leistungsmerkmale und Fähigkeiten aufweisen kann:
1. Der Applikationsserver ist in der Lage, über ein beliebiges Protokoll (welches proprietär sein kann) mit Anwendungsclients zu kommunizieren, welche auf den Kommunikationsendgeräten ausgeführt werden.
2. Er unterstützt den Aufbau von Anwendungssitzungen für eine Anzahl von Anwendungsclients.
3. Er steuert eine Anwendungs-Session in Form eines APIs (Application Programming Interface) oder durch die Unterstützung eines offenen Protokolls, wie zum Beispiel das "Session Initiation Protocol (SIP)", welches ein Netzprotokoll zum Aufbauen einer IP-Telefonie ist.
4. Der Applikationsserver stellt mindestens eine der folgenden Fähigkeiten zur Verfügung:
   Eine Anzahl anonymer Anwendungsclients kann einer Anwendungssitzung beitreten, indem sie den Identifizierer SID der Sitzung bereitstellen. Dies ist zum Beispiel der Fall, wenn verschiedene Webbrowser einer Sitzung beitreten, indem sie denselben Session-Cookie oder dieselbe Session-URL benutzen.
   Eine Anzahl unterschiedlicher Nutzer mit unterschiedlichen Nutzer-IDs kann derselben Anwendungssitzung beitreten. Das ist zum Beispiel der Fall, wenn mehrere Nutzer einer Sprach- oder Videokonferenz beitreten.
   Ein einzelner Nutzer kann mit derselben Nutzer-ID eine Anwendungssession mit verschiedenen Anwendungsclients zur selben Zeit beitreten. Dies ist zum Beispiel bei einer SIP-Sprachkonferenz möglich.

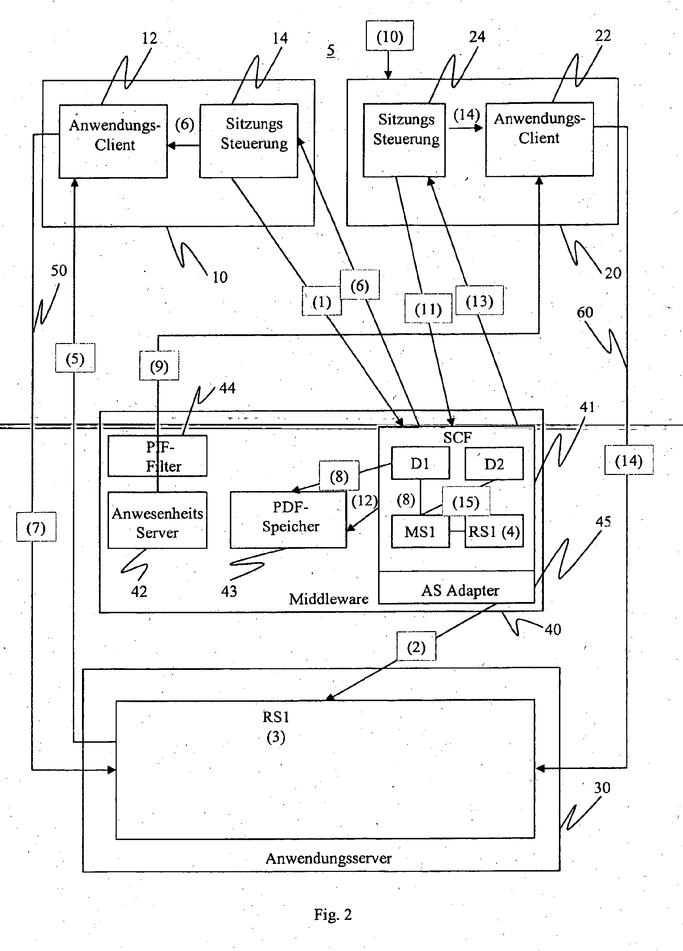

Nachfolgend wird die Funktionsweise des in Fig. 1 dargestellten Kommunikationssystems 5 in Verbindung mit Fig. 2 anhand eines Ausführungsbeispiels erläutert. Angenommen sei, dass eine Anwendungssitzung oder der Zugriff auf die Anwendungssitzung, welche zwischen dem Anwendungssever 30 und dem Kommunikationsendgerät 10 besteht, auf das Kommunikationsendgerät 20 übertragen werden soll. Angenommen sei weiterhin, dass die beiden Kommunikationsendgeräte 10 und 20 ihre Präsenzinformationen zum Presenceserver 42 übertragen haben. Darüber hinaus sind beide Kommunikationsendgeräte 10 und 20 in der Lage, die Präsenzinformation des jeweils anderen Kommunikationsendgerätes vom Presenceserver 42 abzufragen.

Wie in Fig. 1 dargestellt, sendet zunächst die Session-Steuerung 14 des Kommunikationsendgerätes 10 in Schritt 1 eine Anforderungsnachricht für den Aufbau einer bestimmten Anwendungssitzung zur Sitzungssteuereinrichtung 41. Dies kann beispielsweise durch eine INVITE-Anforderungsmeldung gemäß dem Session Initiation Protocol SIP geschehen. Unter Ansprechen auf die INVITE-Anforderungsmeldung überträgt die Sitzungssteuereinrichtung 41 über den Applikationsserver-Adapter 45 einen Steuerbefehl zum Applikationsserver 30 in Schritt 2, um die eigentliche Anwendungssitzung zu starten. Unter Ansprechen auf den in Schritt 2 empfangenen Steuerbefehl startet der Anwendungsserver 30 in Schritt 3 die Anwendungssitzung RS1. Gleichzeitig erzeugt der Applikationsserver einen Identifizierungscode für die gestartete Anwendungssitzung, die im Folgenden RS1 lautet. Der Applikationsserver 30 überträgt die Anwendungssitzungskennung RS1 zur Sitzungssteuereinrichtung 41, die in Schritt 4 eine Repräsentation der mit RS1 bezeichneten Anwendungssitzung speichert und diese intern mit der Anwendungssitzung RS1 assoziiert. Diese Darstellung heißt beispielsweise MS1, wie in Schritt 4 dargestellt.

Gemäß einem Ausführungsbeispiel sei angenommen, dass der Applikationsserver 30 in der Lage ist, in Schritt 5 eine Einladungsmeldung über das Internet zum Anwendungsclient 12 des Kommunikationsendgerätes 10 zu übertragen, wodurch der Applikationsclient 12 aufgefordert wird, der Anwendungssitzung RS1 beizutreten. Unter Ansprechen auf die Einladungsmeldung wird der Anwendungsclient 12 auf dem Kommunikationsendgerät 10 gestartet.

Für den Fall, dass der Applikationsserver 30 nicht in der Lage ist, in Schritt 5 eine Einladungsnachricht an den Anwendungsclient 12 der Kommunikationsendgerät 10 zu schicken, benachrichtigt die Sitzungssteuereinrichtung 41 die Sitzungssteuerung 14 des Kommunikationsendgerätes 10 über den Start der Anwendungssitzung RS1 und sendet alle notwendigen Steuerbefehle und Informationen zur Sitzungssteuerung 14, damit diese den Anwendungsclient 12 auf dem Kommunikationsendgerät 10 starten kann, so dass der Applikationsclient 12 auf die Anwendungssitzung RS1 zugreifen kann, wie dies durch die Schritte 6 und 7 in Fig. 2 dargestellt ist. In Schritt 7 tritt der Anwendungsclient 12 nunmehr der Anwendungssitzung RS1 bei.

In Schritt 8 erzeugt die Sitzungssteuereinrichtung 41 eine Zuordnung zwischen dem Kommunikationsendgerät 10 mit der Darstellung MS1 der Anwendungssitzung RS1 und benachrichtigt den PDF-Speicher 43 in Schritt 8 hierüber. In Schritt 9 überträgt der Presenceserver 42 eine Liste von Presentities, das heißt eine Liste von gespeicherten Kommunikationsdatenendgeräten, zum Kommunikationsendgerät 10. Diese Liste kann zuvor mittels des Präsenzinformationsfilters 44 verändert worden sein. So kann die Liste beispielsweise Informationen darüber enthalten, dass lediglich die aktuelle Anwendungssitzung zum Kommunikationsendgerät 20 übertragen werden kann. Der Nutzer wählt nunmehr in Schritt 10 am Kommunikationsendgerät 10 das Kommunikationsendgerät 20 aus, zu welchem die aktuelle Anwendungssitzung übertragen werden soll. Unter Ansprechen auf das ausgewählte Kommunikationsendgerät 20 sendet die Sitzungssteuerung 14 des Kommunikationsendgerätes 10 in Schritt 11 eine Zugriffsberechtigungs-Anforderungs-Meldung zur Sitzungssteuereinrichtung 41. Vorzugsweise enthält die Zugriffsberechtigungs-Anforderungs-Meldung eine spezielle Kennung des ausgewählten Kommunikationsendgerätes 20. Unter Ansprechen auf die Zugriffsberechtigungs-Anforderungs-Meldung prüft die Sitzungssteuereinrichtung 41 mit Hilfe der im PDF-Speicher 43 abgelegten Daten, ob das ausgewählte Kommunikationsendgerät 20 ein gültiges Ziel für die Sitzungsübertragung ist. Diese Prüfung erfolgt in Schritt 12. Sollte die Sitzungssteuereinrichtung 41 feststellen, dass die Anwendungssitzung nicht auf das Kommunikationsendgerät 20 übergehen darf, erzeugt sie eine Fehlermeldung und überträgt diese an das Kommunikationsendgerät 10 und der Vorgang wird beendet. Stellt die Sitzungssteuereinrichtung 41 jedoch fest, dass die Anwendungssitzung zum ausgewählten Kommunikationsendgerät 20 übertragen werden darf, fordert die Sitzungssteuereinrichtung 41 gemäß einem bevorzugten Ausführungsbeispiel den Applikationsserver 30 über den AS-Adapter 45 auf, die Sitzungsidentifikation RS1, die der Anwendungssitzung zugeordnet worden ist, an die Sitzungssteuereinrichtung 41 zu übertragen. Die Sitzungssteuereinrichtung 41 fügt die Sitzungsidentifikation RS1 einer Einladungsmeldung hinzu und überträgt beide in Schritt 13 zur Sitzungssteuerung 24 des Kommunikationsendgerätes 20. Die Sitzungssteuerung 24 startet unter Ansprechen auf die Einladungsmeldung den Anwendungsclient 22 und fordert ihn auf, der Anwendungssitzung RS1 beizutreten. Hierzu übergibt die Sitzungssteuerung 24 unter anderem die Sitzungsidentifikation der Anwendungssitzung RS1 an den Anwendungsclient 22, der daraufhin der Anwendungssitzung beitritt, indem eine Verbindung 60 über das Internet vom Anwendungsclient 22 zum Applikationsserver 30 in Schritt 14 aufgebaut wird. Nachdem die Anwendungssitzung RS1 vom Kommunikationsendgerät 10 auf das Kommunikationsendgerät 20 übergeben worden ist, erzeugt die Sitzungssteuereinrichtung 41 eine Zuordnung zwischen der Kennung des Kommunikationsendgerätes 20 und der Repräsentation MS1 der übertragenen Anwendungssitzung RS1. Die Übertragung des Sitzungszugriffs vom Kommunikationsendgerät 10 zum Kommunikationsendgerät 20 ist damit abgeschlossen. Je nach Implementation der Sitzungssteuereinrichtung 41 kann nach erfolgter Übertragung des Sitzungszugriffs die Anwendungssitzung zwischen dem Applikationsclient 12 und dem Applikationsserver 30 beendet werden.

Alternativ kann anstelle der Sitzungssteuereinrichtung 41 der Applikationsserver 30, sofern er entsprechend implementiert ist, den Anwendungsclient 22 des Kommunikationsendgerätes 20 selbst einladen, der bestehenden Anwendungssitzung RS1 beizutreten. Hierzu fordert zunächst die Sitzungssteuereinrichtung 41 den Applikationsserver 30 auf, eine Einladungsmeldung zum Applikationsclient 22 zu übertragen, mit der der Anwendungsclient 22 aufgefordert wird, sich mit einer Nutzer-ID anzumelden, die nicht der Nutzer-ID des Anwendungsclients 12 des Kommunikationsendgerätes 10 entspricht. Ist jedoch der Anwendungsserver 30 nicht in der Lage, den Anwendungsclient 22 aufzufordern, der bestehenden Anwendungssitzung RS1 beizutreten, fordert, wie bereits erwähnt, die Sitzungssteuereinrichtung 41 die Sitzungssteuerung 24 auf, den Anwendungsclient 22 zu starten und der bestehenden Anwendungssitzung RS1 unter der gleichen Nutzer-ID wie der Anwendungsclient 12 des Kommunikationsendgerätes 10 oder einer anderen Nutzer-ID beizutreten. Die von den Kommunikationsendgeräten 10 und 20 erhaltenen Nutzer-IDs können mit Hilfe des Presenceserver 42 auf eine einzige, extern sichtbare Nutzer-ID abgebildet werden. Auf diese Weise bleiben die Kommunikationsendgeräte für die Anwender unsichtbar.

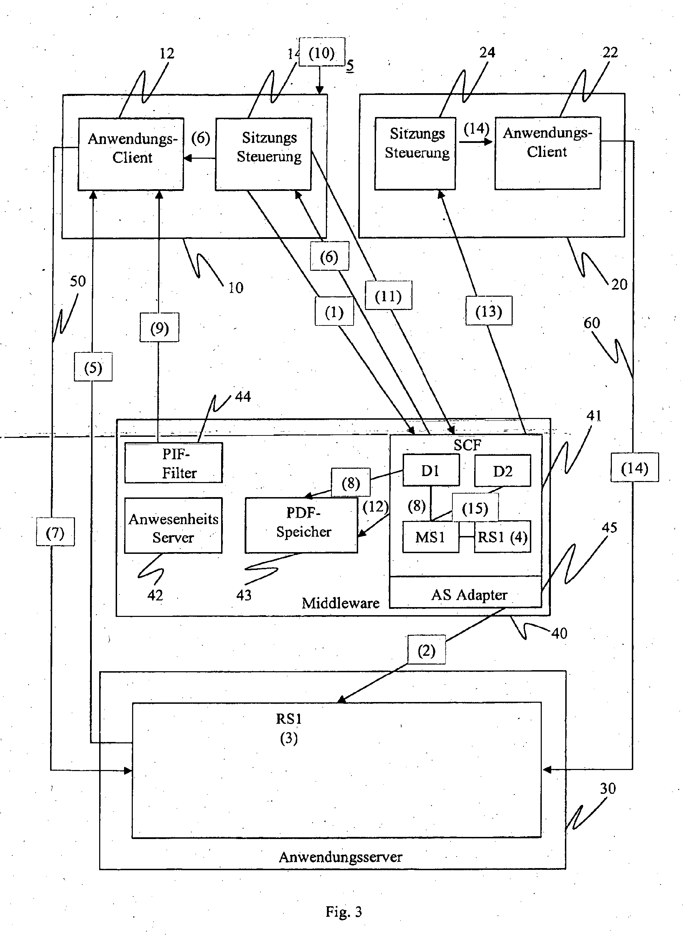

Nachfolgend wird die Funktionsweise des Kommunikationssystems anhand eines zweiten Szenarios in Verbindung mit der Fig. 3 näher erläutert. Der einzige Unterschied zu dem zuvor beschriebenen Ausführungsbeispiel ist darin zu sehen, dass die Übertragung der Anwendungssitzung nicht mehr am Kommunikationsendgerät 10, welches die Anwendungssitzung gestartet hat, sondern am Kommunikationsendgerät 20, auf welches die Anwendungssitzung RS1 übergeben werden soll, in Schritt 10 ausgelöst wird. Die hinsichtlich der Fig. 2 beschriebenen Schritte 1 bis 8 werden unverändert auch hinsichtlich der in Fig. 3 dargestellten Ausführungsform ausgeführt. In Schritt 9 wird im Unterschied zum ersten Szenario nunmehr nicht mehr dem Kommunikationsendgerät 10, sondern dem Kommunikationsendgerät 20 eine Liste von Presentities vom Presenceserver 42 zur Verfügung gestellt. Der Nutzer wählt nun am Kommunikationsendgerät 20 das Kommunikationsendgerät 10 aus der Liste aus, welches augenblicklich an der Anwendungssitzung RS1 teilnimmt, um die Übertragung der Anwendungssitzung einzuleiten. Nachdem der Nutzer das Kommunikationsendgerät 10 ausgewählt hat, sendet die Sitzungssteuerung 24 des Kommunikationsendgerätes 20 eine Zugriffsberechtigungs-Anforderungs-Meldung zur Sitzungssteuereinrichtung 41. Die Zugriffsberechtigungs-Anforderungs-Meldung enthält beispielsweise als Kennung eine Nutzer-ID des Kommunikationsendgerätes 20. Anhand dieser Kennung und der im PDF-Speicher 43 abgelegten Daten kann die Sitzungssteuereinrichtung 41 prüfen, ob das Kommunikationsendgerät 20 ein gültiges Ziel für eine Übergabe der Anwendungssitzung ist. Anschließend werden die bereits anhand des ersten Szenario beschriebenen Verfahrensschritte 12 bis 15 unverändert ausgeführt.

Angemerkt sei schließlich noch, dass die in den Fig. 1 bis 3 dargestellten Komponenten der Middleware 40 auch Bestandteile des Applikationsservers 30 sein können.

## Patentansprüche

1. Verfahren zur Steuerung des Zugriffs mehrerer Kommunikationsendgeräte (10, 20) auf eine serverbasierte Anwendungssitzung, wobei in jedem Kommunikationsendgerät (10, 20) ein Anwendungsclient (12, 22) und eine Sitzungssteuereinrichtung (14, 24) implementiert sind, mit folgenden Verfahrensschritten:
a) Bereitstellen wenigstens einer Softwareanwendung von einem Anwendungsserver (30);
b) Senden einer Sitzungsanforderungs-Nachricht zum Aufbauen einer Anwendungssitzung von der Sitzungssteuereinrichtung (14) einer ersten Kommunikationsendgeräts (10) zu einer weiteren, dem Anwendungsserver (30) zugeordneten Sitzungssteuereinrichtung (41);
c) Starten der Anwendungssitzung durch den Anwendungsserver (30);
d) Zuordnen einer Kennung der Anwendungssitzung;
e) Übertragen der Kennung der Anwendungssitzung zum ersten Kommunikationsendgerät (10);
f) Herstellen einer Verbindung zwischen dem Anwendungsclient (12) des ersten Kommunikationsendgerätes (10) und dem Anwendungsserver (30) unter Ansprechen auf die Kennung der Anwendungssitzung;
g) Übertragen einer dem ersten Kommunikationsendgerät zugeordneten Kennung zur weiteren Sitzungssteuereinrichtung (41) ;
h) Erzeugen einer Zuordnung zwischen der Kennung der Anwendungssitzung und der Kennung des ersten Kommunikationsendgeräts (10);
i) Übertragen einer Zugriffsberechtigungs-Anforderungs-Nachricht zur Anforderung einer Zugriffsberechtigung zu der Anwendungssitzung für ein zweites Kommunikationsendgerät (20) zur weiteren Sitzungssteuereinrichtung (41);
j) Übertragen einer Einladungsnachricht, welche die Kennung der Anwendungssitzung enthalten kann, zum zweiten Kommunikationsendgerät (20);
k) Herstellen einer Verbindung zwischen dem Anwendungsclient (22) des zweiten Kommunikationsendgerätes (20) und dem Anwendungsserver (30) unter Ansprechen auf die Einladungsnachricht, über die der Anwendungsclient auf die Anwendungssitzung zugreifen kann;
l) Übertragen einer dem zweiten Kommunikationsendgerät (20) zugeordneten Kennung zur weiteren Sitzungssteuereinrichtung (41);
m) Erzeugen einer Zuordnung zwischen der Kennung der Anwendungssitzung und der Kennung des zweiten Kommunikationsendgeräts
**dadurch gekennzeichnet, dass**
in Schritt f) die weitere, dem Anwendungsserver zugeordnete Sitzungssteuereinrichtung (41) die Sitzungssteuereinrichtung (14) des ersten Kommunikationsendgeräts (10) veranlasst, den Anwendungsclient (12) des ersten Kommunikationsendgeräts (10) zu starten, um die Verbindung zwischen dem Anwendungsclient (12) des ersten Kommunikationsendgerätes (10) und dem Anwendungsserver (30) herzustellen.

2. Verfahren nach Anspruch 1,
**dadurch gekennzeichnet, dass**
in Schritt f) der Anwendungsserver (30) und der Anwendungsclient (12) des ersten Kommunikationsendgeräts (10) unter Ansprechen auf die Kennung der Anwendungssitzung Nachrichten zum Herstellen der Verbindung austauschen.

3. Verfahren nach einem der Ansprüche 1 oder 2,
**dadurch gekennzeichnet, dass**
in Schritt i) die Sitzungssteuereinrichtung (12) des ersten Kommunikationsendgeräts (10) die Zugriffsberechtigungs-Anfordungs-Nachricht zur weiteren, dem Anwendungsserver (30) zugeordneten Sitzungssteuereinrichtung (41) überträgt, wobei die Zugriffsberechtigungs-Anfordungs-Nachricht eine Kennung des zweiten Kommunikationsendgeräts (20) enthält.

4. Verfahren nach einem der Ansprüche 1 oder 2,
**dadurch gekennzeichnet, dass**
in Schritt i) die Sitzungssteuereinrichtung (24) des zweiten Kommunikationsendgeräts (20) die Zugriffsberechtigungs-Anfordungs-Nachricht zur weiteren Sitzungssteuereinrichtung (41) überträgt, wobei die Zugriffsberechtigungs-Anfordungs-Nachricht eine Kennung des ersten Kommunikationsendgeräts (10) enthält.

5. Verfahren nach einem der Ansprüche 1 bis 4,
**dadurch gekennzeichnet, dass**
Kommunikationsendgeräte bezogene Informationen, Nutzer spezifische Informationen und/oder Steuerparameter gespeichert werden, und dass
Schritt i) folgenden Schritt enthält:
in Abhängigkeit von den Kommunikationsendgeräte bezogenen Informationen, Nutzer spezifischen Informationen und/oder den Steuerparametern wird geprüft, ob das zweite Kommunikationsendgerät (20) auf die Anwendungssitzung zugreifen darf.

6. Verfahren nach einem der Ansprüche 1 bis 5,
**dadurch gekennzeichnet, dass**
die in den Schritten g) und 1) übertragenen Kennungen des ersten und zweiten Kommunikationsendgeräts gleich oder verschieden sind und auf eine vorbestimmte Kennung abgebildet werden, die für Dritte sichtbar ist.

7. Verfahren nach einem der Ansprüche 1 bis 6,
**dadurch gekennzeichnet, dass**
die weitere Sitzungssteuereinrichtung (41) die Anwendungssitzung zwischen dem Anwendungsclient (12) des ersten Kommunikationsendgeräts (10) und dem Anwendungsserver (30) beendet, nachdem das zweite Kommunikationsendgerät (20) auf die Anwendungssitzung zugegriffen hat.

8. Verfahren nach einem der Ansprüche 1 bis 7,
**dadurch gekennzeichnet, dass**
in Schritt j) der Anwendungsserver (30) von der weiteren Sitzungssteuereinrichtung (41) aufgefordert wird, eine Einladungsnachricht, welche die Kennung der Anwendungssitzung enthalten kann, zum zweiten Kommunikationsendgerät zu übertragen, und dass der Anwendungsserver (30) in Schritt k) aufgefordert wird, eine Verbindung zum Anwendungsclient (22) des zweiten Kommunikationsendgerätes (20) unter Ansprechen auf die Einladungsnachricht herzustellen, so dass der Anwendungsclient auf die Anwendungssitzung zugreifen kann.

9. Verfahren nach einem der Ansprüche 1 bis 7,
**dadurch gekennzeichnet, dass**
die weitere Sitzungssteuereinrichtung (41) in Schritt j) eine Einladungsnachricht, welche die Kennung der Anwendungssitzung enthalten kann, zum zweiten Kommunikationsendgerät (20) überträgt, und
in Schritt k) den Anwendungsclient des zweiten Kommunikationsendgerätes (20) veranlasst, unter Ansprechen auf die Einladungsnachricht eine Verbindung zum Anwendungsserver (30) herzustellen, so dass der Anwendungsclient auf die Anwendungssitzung zugreifen kann.

## Claims

1. A method for controlling the access of a plurality of communication terminals (10, 20) to a server-based application session, wherein in each communication terminal (10, 20) an application client (12, 22) and a session control means (14, 24) are implemented, the method comprising the steps of:
a) providing at least one software application, by an application server (30);
b) transmitting a session request message for establishing an application session from the session control means (14) of a first communication terminal (10) to another session control means (41) associated with the application server (30) ;
c) starting the application session, by the application server (30);
d) assigning an identifier to the application session;
e) transmitting the application session identifier to the first communication terminal (10);
f) establishing, in response to the application session identifier, a connection between the application client (12) of the first communication terminal (10) and the application server (30);
g) transmitting, to the further session control means (41), an identifier associated with the first communication terminal;
h) generating an association between the application session identifier and the identifier of the first communication terminal (10);
i) transmitting, to the further session control means (41), an access authorization request message for requesting a permission to access the application session for a second communication terminal (20);
j) transmitting, to the second communication terminal (20), an invite message which may include the application session identifier;
k) establishing, in response to the invite message, a connection between the application client (22) of the second communication terminal (20) and the application server (30), through which the application client can access the application session;
l) transmitting, to the further session control means (41), an identifier associated with the second communication terminal (20);
m) generating an association between the application session identifier and the identifier of the second communication terminal;
**characterized in that**
in step f), the further session control means (41) associated with the application server causes the session control means (14) of the first communication terminal (10) to start the application client (12) of the first communication terminal (10) in order to establish the connection between the application client (12) of the first communication terminal (10) and the application server (30).

2. The method according to claim 1,
**characterized in that**
in step f), the application server (30) and the application client (12) of the first communication terminal (10), in response to the application session identifier, exchange messages for establishing the connection.

3. The method according to any of claims 1 or 2,
**characterized in that**
in step i), the session control means (12) of the first communication terminal (10) transmits the access authorization request message to the further session control means (41) associated with the application server (30), said access authorization request message including an identifier of the second communication terminal (20).

4. The method according to any of claims 1 or 2,
**characterized in that**
in step i), the session control means (24) of the second communication terminal (20) transmits the access authorization request message to the further session control means (41), said access authorization request message including an identifier of the first communication terminal (10).

5. The method according to any of claims 1 to 4,
**characterized in that**
communication terminal related information, user-specific information and/or control parameters are stored; and **in that** step i) comprises the step of:
checking, based on the communication terminal related information, the user-specific information and/or the control parameters, whether the second communication terminal (20) is authorized to access the application session.

6. The method according to any of claims 1 to 5,
**characterized in that**
the identifiers of the first and second communication terminals transmitted in steps g) and 1) are the same or are different, and are mapped to a predefined identifier that is visible to a third party.

7. The method according to any of claims 1 to 6,
**characterized in that**
the further session control means (41) terminates the application session between the application client (12) of the first communication terminal (10) and the application server (30), after the second communication terminal (20) has accessed the application session.

8. The method according to any of claims 1 to 7,
**characterized in that**
in step j), the application server (30) is prompted by the further session control means (41) to transmit an invite message which may include the application session identifier to the second communication terminal; and that in step k), the application server (30) is prompted, in response to the invite message, to establish a connection to the application client (22) of the second communication terminal (20), so that the application client can access the application session.

9. The method according to any of claims 1 to 7,
**characterized in that**
in step j), the further session control means (41) transmits an invite message which may include the application session identifier to the second communication terminal (20) and
in step k), in response to the invite message, causes the application client of the second communication terminal (20) to establish a connection to the application server (30), so that the application client can access the application session.

## Revendications

1. Procédé de commande de l'accès de plusieurs terminaux de communication (10, 20) à une session d'application basée sur un serveur, un client d'application (12, 22) et un dispositif de commande de session (14, 24) étant implémentés dans chaque terminal de communication (10, 20), comprenant les étapes suivantes :
a) fourniture d'au moins une application logicielle par un serveur d'application (30) ;
b) envoi d'un message de demande de session pour l'ouverture d'une session d'application par le dispositif de commande de session (14) d'un premier terminal de communication (10) à un autre dispositif de commande de session (41) associé au serveur d'application (30) ;
c) ouverture de la session d'application par le serveur d'application (30) ;
d) attribution d'une identification à la session d'application ;
e) transmission de l'identification de la session d'application au premier terminal de communication (10) ;
f) établissement d'une connexion entre le client d'application (12) du premier terminal de communication (10) et le serveur d'application (30) en réaction à l'identification de la session d'application ;
g) transmission d'une identification associée au premier terminal de communication à l'autre dispositif de commande de session (41) ;
h) génération d'une association entre l'identification de la session d'application et l'identification du premier terminal de communication (10) ;
i) transmission à l'autre dispositif de commande de session (41) d'un message de demande d'autorisation d'accès pour la demande d'une autorisation d'accès à la session d'application pour un deuxième terminal de communication (20) ;
j) transmission au deuxième terminal de communication (20) d'un message d'invitation pouvant contenir l'identification de la session d'application ;
k) établissement d'une connexion entre le client d'application (22) du deuxième terminal de communication (20) et le serveur d'application (30) en réaction au message d'invitation, connexion par laquelle le client d'application peut accéder à la session d'application ;
l) transmission d'une identification associée au deuxième terminal de communication (20) à l'autre dispositif de commande de session (41) ;
m) génération d'une association entre l'identification de la session d'application et l'identification du deuxième terminal de communication,
**caractérisé en ce que** :
lors de l'étape f), l'autre dispositif de commande de session (41) associé au serveur d'application provoque le démarrage du client d'application (12) du premier terminal de communication (10) par le dispositif de commande de session (14) du premier terminal de communication (10) pour établir la connexion entre le client d'application (12) du premier terminal de communication (10) et le serveur d'application (30).

2. Procédé selon la revendication 1, **caractérisé en ce que** :
lors de l'étape f), le serveur d'application (30) et le client d'application (12) du premier terminal de communication (10) échangent des messages relatifs à l'établissement de la connexion en réaction à l'identification de la session d'application.

3. Procédé selon la revendication 1 ou 2, **caractérisé en ce que** :
lors de l'étape i), le dispositif de commande de session (12) du premier terminal de communication (10) transmet le message de demande d'autorisation d'accès à l'autre dispositif de commande de session (41) associé au serveur d'application (30), le message de demande d'autorisation d'accès contenant une identification du deuxième terminal de communication (20).

4. Procédé selon la revendication 1 ou 2, **caractérisé en ce que** :
lors de l'étape i), le dispositif de commande de session (24) du deuxième terminal de communication (20) transmet le message de demande d'autorisation d'accès à l'autre dispositif de commande de session (41), le message de demande d'autorisation d'accès contenant une identification du premier terminal de communication (10).

5. Procédé selon l'une des revendications 1 à 4, **caractérisé en ce que** :
des informations relatives aux terminaux de communication, des informations spécifiques aux utilisateurs et/ou des paramètres de commande sont mémorisés, et **en ce que** :
l'étape i) comprend l'étape suivante :
contrôle si le deuxième terminal de communication (20) peut accéder à la session d'application, en fonction des informations relatives aux terminaux de communication, des informations spécifiques aux utilisateurs et/ou des paramètres de commande.

6. Procédé selon l'une des revendications 1 à 5, **caractérisé en ce que** :
les identifications du premier et du deuxième terminal de communication transmises lors des étapes g) et 1) sont identiques ou différentes, et sont représentées par une identification prédéterminée visible pour des tiers.

7. Procédé selon l'une des revendications 1 à 6, **caractérisé en ce que** :
l'autre dispositif de commande de session (41) clôt la session d'application entre le client d'application (12) du premier terminal de communication (10) et le serveur d'application (30) après que le deuxième terminal de communication (20) a accédé à la session d'application.

8. Procédé selon l'une des revendications 1 à 7, **caractérisé en ce que** :
lors de l'étape j), l'autre dispositif de commande de session (41) demande au serveur d'application (30) de transmettre un message d'invitation pouvant contenir l'identification de la session d'application au deuxième terminal de communication, et **en ce que**, lors de l'étape k), il est demandé au serveur d'application (30) d'établir une connexion au client d'application (22) du deuxième terminal de communication (20) en réaction au message d'invitation, si bien que le client d'application peut accéder à la session d'application.

9. Procédé selon l'une des revendications 1 à 7, **caractérisé en ce que** :
lors de l'étape j), l'autre dispositif de commande de session (41) transmet un message d'invitation pouvant contenir l'identification de la session d'application au deuxième terminal de communication (20), et provoque, lors de l'étape k), l'établissement d'une connexion au serveur d'application (30) par le client d'application du deuxième terminal de communication (20), en réaction au message d'invitation, si bien que le client d'application peut accéder à la session d'application.
